(19) Europäisches Patentamt / European Patent Office / Office européen des brevets

(11) **EP 3 733 610 A1**

(12) **EUROPEAN PATENT APPLICATION**

(43) Date of publication:
**04.11.2020 Bulletin 2020/45**

(51) Int Cl.:
*C01G 53/00* (2006.01)  *H01M 4/00* (2006.01)

(21) Application number: **20167417.3**

(22) Date of filing: **31.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 KR 20190049393**
**17.05.2019 KR 20190058373**

(71) Applicants:
• **Samsung SDI Co., Ltd.**
**Gyeonggi-do 17084 (KR)**
• **Seoul National University R & DB Foundation Seoul 08826 (KR)**

(72) Inventors:
• **CHO, Kwanghwan**
**Yongin-si Gyeonggi-do 17084 (KR)**
• **LEE, Kyu Tae**
**Seocho-gu Seoul 06610 (KR)**
• **KIM, Hanseul**
**Gwanak-gu Seoul 08785 (KR)**
• **DOO, Sung Wook**
**Gwanak-gu Seoul 08799 (KR)**
• **KIM, Seongmin**
**Yangsan-si Gyeongsangnam-do 50611 (KR)**

(74) Representative: **Shearman, James Ward**
**Marks & Clerk LLP**
**15 Fetter Lane**
**London EC4A 1BW (GB)**

(54) **POSITIVE ACTIVE MATERIAL FOR RECHARGEABLE LITHIUM BATTERY, METHOD OF PREPARING THE SAME, AND RECHARGEABLE LITHIUM BATTERY INCLUDING THE SAME**

(57)     Disclosed are a positive active material for a rechargeable lithium battery including a nickel-based lithium metal oxide having a layered crystal structure and a coating layer including a lithium-metal oxide selevtively disposed on (003) crystalline plane of the nickel-based lithium metal oxide, wherein the positive active material includes at least one secondary particle including an agglomerate of two or more primary particles, a method of preparing the same, and a rechargeable lithium battery including the positive active material.

FIG. 5A

EP 3 733 610 A1

**Description**

**BACKGROUND OF THE INVENTION**

**(a) Field of the Invention**

The present invention relates to a positive active material for a rechargeable lithium battery, a method of preparing the same, and a rechargeable lithium battery including the same.

**(b) Description of the Related Art**

Rechargeable lithium batteries are used in a variety of applications due to a high voltage and a high energy density. For example, electric vehicles require lithium rechargeable batteries having improved discharge capacity and life-span characteristics because they can operate at high temperatures, should charge or discharge large amounts of electricity, and must be used for a long time.

As a positive active material for lithium rechargeable batteries, nickel-based lithium metal oxide has been widely used as a positive active material due to improved capacity characteristics. However, the nickel-based lithium metal oxide may exhibit deteriorated cell characteristics due to side-reaction with an electrolyte solution, and thus improvement therefore is required.

**SUMMARY OF THE INVENTION**

An embodiment provides a positive active material that easily intercalates/deintercalates lithium ions and provides improved power output characteristics.

Another embodiment provides a method of preparing the positive active material.

Another embodiment provides a rechargeable lithium battery having improved power output characteristics by employing a positive electrode including the positive active material.

An embodiment provides a positive active material for a rechargeable lithium battery including a nickel-based lithium metal oxide having a layered crystal structure and a coating layer including a lithium-metal oxide selectively disposed on (003) crystalline plane of the nickel-based lithium metal oxide, wherein the positive active material includes at least one secondary particle including an agglomerate of two or more primary particles.

The lithium-metal oxide may have a C2/c space group crystal structure of a monoclinic crystal system.

A lattice mismatch ratio between a (003) plane of the nickel-based lithium metal oxide and a (001) plane (l is 1, 2, or 3) of the lithium-metal oxide may be less than or equal to about 15%.

The lithium-metal oxide may include a compound represented by Chemical Formula 1, a compound represented by Chemical Formula 2, or a combination thereof.

$$[\text{Chemical Formula 1}] \quad Li_2MO_3$$

$$[\text{Chemical Formula 2}] \quad Li_8MO_6$$

In Chemical Formula 1 and Chemical Formula 2,

M is a metal having an oxidation number of 4.

The lithium-metal oxide may include $Li_2SnO_3$, $Li_2ZrO_3$, $Li_2TeO_3$, $Li_2RuO_3$, $Li_2TiO_3$, $Li_2MnO_3$, $Li_2PbO_3$, $Li_2HfO_3$, $Li_8SnO_6$, $Li_8ZrO_6$, $Li_8TeO_6$, $Li_8RuO_6$, $Li_8TiO_6$, $Li_8MnO_6$, $Li_8PbO_6$, $Li_8HfO_6$, or a combination thereof.

A content of the lithium-metal oxide may be about 0.1 mol% to about 5 mol% based on a total amount of the nickel-based lithium metal oxide and the lithium-metal oxide.

The coating layer may have a thickness of about 1 nm to about 100 nm.

The lithium-metal oxide selectively disposed on the (003) crystalline plane of the nickel-based lithium metal oxide and the nickel-based lithium metal oxide may have a layered structure that is epitaxially grown in the same c-axis direction.

The nickel-based lithium metal oxide may include a compound represented by Chemical Formula 3, a compound represented by Chemical Formula 4, or a combination thereof.

$$[\text{Chemical Formula 3}] \quad Li_aNi_xCO_yQ^1_{1-x-y}O_2$$

In Chemical Formula 3,

$0.9 \leq a \leq 1.05$, $0.6 \leq x \leq 0.98$, $0.01 \leq y \leq 0.40$, and $Q^1$ is at least one metal element selected from Mn, Al, Cr, Fe, V, Mg, Nb, Mo, W, Cu, Zn, Ga, In, La, Ce, Sn, Zr, Te, Ru, Ti, Pb, and Hf.

[Chemical Formula 4]     $Li_aNi_xQ2_{1-x}O_2$

In Chemical Formula 4,

$0.9 \le a \le 1.05$, $0.6 \le x \le 1.0$, and $Q^2$ is at least one metal element selected from Mn, Al, Cr, Fe, V, Mg, Nb, Mo, W, Cu, Zn, Ga, In, La, Ce, Sn, Zr, Te, Ru, Ti, Pb, and Hf.

The primary particles may have a particle diameter of about 100 nm to about 5 μm. The secondary particle may include at least one of a small particle diameter secondary particle having a particle diameter of greater than or equal to about 5 μm and less than about 8 μm and a large particle diameter secondary particle having a particle diameter of greater than or equal to about 8 μm and less than or equal to about 20 μm.

The primary particles may have a particle diameter of about 500 nm to about 3 μm.

The secondary particle may include at least one of a small particle diameter secondary particle having a particle diameter of greater than or equal to about 5 μm and less than about 6 μm and a large particle diameter secondary particle having a particle diameter of greater than or equal to about 10 μm and less than or equal to about 20 μm.

Another embodiment provides a method of preparing a positive active material for a rechargeable lithium battery that includes

mixing a first precursor for forming lithium-metal (M) oxide and a second precursor for forming nickel-based lithium metal oxide having a layered crystal structure with a solvent to obtain a precursor composition,

adding a surfactant to the precursor composition, and

first heat-treating the resultant in a sealed state and drying to produce a positive active material precursor, and

mixing the positive active material precursor with a lithium precursor followed by second heat-treating to produce the positive active material.

The first heat-treating may be performed at about 150 °C to about 550 °C.

The second heat-treating may be performed at about 600 °C to about 950 °C.

The second heat-treating may be performed at a temperature-increasing rate of less than or equal to about 5°C/min.

The method may further include cooling after the second heat-treating, and the cooling may be performed at a cooling rate of less than or equal to about 1°C/min.

The method may further include additional heat-treating after the second heat-treating.

The first precursor may include a metal (M)-containing halide, a metal (M)-containing sulfate, a metal (M)-containing hydroxide, a metal (M)-containing nitrate, a metal (M)-containing carboxylate, a metal (M)-containing oxalate, or a combination thereof.

The second precursor may include at least one nickel precursor selected from $Ni(OH)_2$, NiO, NiOOH, $NiCO_3 \cdot 2Ni(OH)_2 \cdot 4H_2O$, $NiC_2O_4 \cdot 2H_2O$,

$Ni(NO_3)_2 \cdot 6H_2O$, $NiSO_4$, $NiSO_4.6H_2O$, a nickel fatty acid salt, and a nickel halide.

The lithium precursor may include a lithium hydroxide, a lithium nitrate, a lithium carbonate, a lithium acetate, a lithium sulfate, a lithium chloride, a lithium fluoride, or a mixture thereof.

Another embodiment provides a rechargeable lithium battery including the positive active material.

At least some of the above and other features of the invention are set out in the claims.

The positive active material includes a coating layer formed only on the (003) crystalline plane in the c-axis direction, so that the charge transfer resistance does not increase compared with the positive active material including a coating layer formed on the crystalline plane in the a-axis and b-axis directions, resulting in providing a rechargeable lithium battery having improved power output characteristics.

In addition, the positive active material has high voltage characteristics, and by adopting such a positive active material, a positive electrode for a rechargeable lithium battery having improved positive electrode slurry stability and active mass density of an electrode plate during electrode manufacturing process may be fabricated. By adopting the positive active material, it is possible to fabricate a rechargeable lithium battery with reduced gas generation at a high voltage, and improved reliability and safety.

## BRIEF DESCRIPTION OF THE DRAWINGS

FIG. 1 is a perspective view schematically showing a representative structure of a rechargeable lithium battery according to an embodiment.

FIG. 2 shows the X-ray diffraction analysis (XRD) results of the positive active materials according to Synthesis Example 1, Synthesis Example 2, and Comparative Synthesis Example 1.

FIGS. 3A to 3D shows a STEM-EDS (scanning transmission electron microscopy-energy dispersive X-ray spectroscopy) analysis result of the positive active material according to Synthesis Example 1.

FIG. 4 shows an EDS-line profile analysis result of the positive active material according to Synthesis Example 1.

FIG. 5A is a STEM-HAADF (scanning transmission electron microscope-high-angle annular dark field) image result in which the interface between $Li[Ni_{0.80}CO_{0.15}Al_{0.05}]O_2$ - $Li_2SnO_3$ of the positive active material according to Synthesis Example 1 is expanded to atomic resolution.

FIG. 5B is a TEM image showing enlarged atom arrangement of the interface of $Li[Ni_{0.80}CO_{0.15}Al_{0.05}]O_2$ and $Li_2SnO_3$ coating layers in the STEM analysis of positive active material according to Synthesis Example 1.

## DETAILED DESCRIPTION OF THE EMBODIMENTS

Hereinafter, further detailed descriptions will be given of a rechargeable lithium battery including a positive active material for a rechargeable lithium battery according to an embodiment and a positive electrode including the manufacturing method and the positive active material. However, the present invention is not limited by these embodiments and the present invention is defined by the scope of claims.

As used herein, the term "particle diameter" refers to an average particle diameter (D50) which is a median value in a particle size distribution, as determined using a particle size analyzer. In some embodiments, the "particle diameter" refers to the average value of the longest length or dimension of the particle which is not spherical particle.

A positive active material for a rechargeable lithium battery according to an embodiment includes a nickel-based lithium metal oxide having a layered crystal structure and a coating layer including a lithium-metal oxide selectively disposed on (003) crystalline plane of the nickel-based lithium metal oxide, wherein the positive active material includes at least one secondary particle including an agglomerate of two or more primary particles.

In order to improve electrochemical characteristics of the nickel-based lithium metal oxide, a method of coating a metal oxide-based or phosphate-based material on the surface thereof is known. By the way, when this method is performed, metal oxide-based or phosphate-based material is non-selectively coated on the whole surface of the nickel-based lithium metal oxide. As a result, charge transfer resistance of the metal oxide-based or phosphate-based material may be increased and thus power output characteristics of a rechargeable lithium battery including a positive electrode using the same may be deteriorated.

In order to solve the aforementioned problem, the present disclosure is to effectively suppress the charge transfer resistance increase without generally interfering lithium intercalation and deintercalation due to the surface coating of the nickel-based lithium metal oxide by forming a coating layer selectively including a lithium-metal oxide not on a crystalline plane where lithium ions are intercalated/deintercalated but on the other (003) crystalline plane of the nickel-based lithium metal oxide.

In the positive active material, the coating layer including the lithium-metal oxide is selectively disposed on a plane where lithium ions are not intercalated and deintercalated, that is, the (003) crystalline plane of the nickel-based lithium metal oxide.

The lithium-metal oxide may have a C2/c space group crystal structure of a monoclinic crystal system. When the lithium-metal oxide has this crystal structure, a lattice mismatch on the interface thereof with the nickel-based lithium metal oxide having a layered crystal structure may be minimized.

Specifically, the lattice mismatch of the (003) plane of the nickel-based lithium metal oxide and a (00l) plane (l is 1, 2, or 3) of the lithium-metal oxide may have a ratio of less than or equal to about 15%, for example, less than or equal to about 13%, less than or equal to about 12%, less than or equal to about 11%, less than or equal to about 10%, less than or equal to about 9%, less than or equal to about 8%, less than or equal to about 7%, less than or equal to about 6%, less than or equal to about 5%, less than or equal to about 4%, or less than or equal to about 3%. When the lattice mismatch has the ratio within the range, the (003) plane of a Li-O octahedron structure of the nickel-based lithium metal oxide and the (00l) plane (l is 1, 2, or 3) of a Li-O octahedron structure of the lithium-metal oxide may be well shared with each other, and the coating layer including the lithium-metal oxide is not separated on the interface but stably present.

The lattice mismatch ratio (%) may be calculated by Equation 1.

$$[\text{Equation 1}]$$

$$\mid A\text{-}B \mid /B \times 100$$

In Equation 1, A indicates an oxygen-oxygen bond length of the (003) plane of the nickel-based lithium metal oxide, and B indicates an oxygen-oxygen bond length of the (00l) plane (l is 1, 2, or 3) of the lithium-metal oxide.

In an embodiment, when the nickel-based lithium metal oxide is $LiNiO_2$, and the lithium-metal (M) oxide is $Li_2MO_3$ of Chemical Formula 1 or $Li_8MO_6$ of Chemical Formula 2, the lattice mismatch ratio is the same as shown in Table 1. The oxygen-oxygen bond length of the (003) plane of $LiNiO_2$ is about 2.875 Å.

(Table 1)

| Lithium-metal (M) oxide | | Oxygen-oxygen bond length of (00l) plane of lithium-metal (M) oxide (Å) | Lattice mismatch ratio (%) |
|---|---|---|---|
| $Li_2MO_3$ | $Sn^{4+}$ | 3.057 | 5.95 |
| | $Zr^{4+}$ | 3.171 | 9.33 |
| | $Te^{4+}$ | 3.241 | 11.29 |
| | $Ru^{4+}$ | 2.888 | 0.45 |
| | $Ti^{4+}$ | 2.926 | 1.74 |
| | $Pb^{4+}$ | 3.028 | 5.05 |
| | $Hf^{4+}$ | 3.151 | 8.76 |
| $Li_8MO_6$ | $Sn^{4+}$ | 3.271 | 12.11 |
| | $Zr^{4+}$ | 3.316 | 13.30 |
| | $Ti^{4+}$ | 3.338 | 13.87 |
| | $Pb^{4+}$ | 3.356 | 14.33 |
| | $Hf^{4+}$ | 3.324 | 13.51 |

Table 1 shows that the lithium-metal oxides such as $Li_2MO_3$ and $Li_8MO_6$ have a lattice mismatch ratio of less than or equal to 15%, indicating that the lithium-metal oxides may be coated on the (003) plane of the layered nickel-based lithium metal oxide of $LiNiO_2$.

The lithium-metal oxide may include a compound represented by Chemical Formula 1, a compound represented by Chemical Formula 2, or a combination thereof.

[Chemical Formula 1]    $Li_2MO_3$

[Chemical Formula 2]    $Li_8MO_6$

In Chemical Formulae 1 and 2, M is a metal having an oxidation number of 4.

The lithium-metal oxide may include $Li_2SnO_3$, $Li_2ZrO_3$, $Li_2TeO_3$, $Li_2RuO_3$, $Li_2TiO_3$, $Li_2MnO_3$, $Li_2PbO_3$, $Li_2HfO_3$, $Li_8SnO_6$, $Li_8ZrO_6$, $Li_8TeO_6$, $Li_8RuO_6$, $Li_8TiO_6$, $Li_8MnO_6$, $Li_8PbO_6$, $Li_8HfO_6$, and a combination thereof.

An amount of the lithium-metal oxide may be less than or equal to about 5 mol%, for example greater than or equal to about 0.1 mol%, greater than or equal to about 0.2 mol%, greater than or equal to about 0.5 mol%, greater than or equal to about 1 mol%, greater than or equal to about 1.5 mol%, or greater than or equal to about 2 mol% and less than or equal to about 5 mol%, less than or equal to about 4.5 mol%, less than or equal to about 4 mol%, or less than or equal to about 3 mol% based on a total amount of the nickel-based lithium metal oxide and the lithium-metal oxide. When the amount of the lithium-metal oxide is within the range, the coating layer on the (003) plane of the nickel-based lithium metal oxide may effectively suppress an increase of the charge transfer resistance.

The positive active material according to an embodiment has a structure that the coating layer including the lithium-metal oxide is stacked on one plane of the nickel-based lithium metal oxide. The coating layer may be selectively disposed on the (003) crystalline plane of the nickel-based lithium metal oxide.

The coating layer may have a thickness ranging from about 1 nm to about 100 nm, for example, about 1 nm to about 80 nm, for example, about 1 nm to about 70 nm, for example, about 1 nm to about 60 nm, for example, about 1 nm to about 50 nm, for example, about 10 nm to about 100 nm, for example, about 20 nm to about 100 nm, for example, about 30 nm to about 100 nm, or for example, about 40 nm to about 100 nm. When the coating layer has a thickness within the ranges, the charge transfer resistance of the nickel-based lithium metal oxide may be effectively blocked from being increased due to the coating.

The coating layer may be a continuous or discontinuous film.

In the positive active material according to an embodiment, the lithium-metal oxide selectively disposed on the (003) crystalline plane of the nickel-based lithium metal oxide and the nickel-based lithium metal oxide may have an epitaxially grown layered structure in the same c-axis direction. In this way, the epitaxially grown layered structure in the c-axis direction may be confirmed by using a TEM (transmission electron microscope) image and a FFT (fast fourier transformation) pattern of the TEM image.

The nickel-based lithium metal oxide coated with the coating layer may have a layered crystal structure. The nickel-based lithium metal oxide having such a layered crystal structure may include a compound represented by Chemical Formula 3, a compound represented by Chemical Formula 4, or a combination thereof.

$$\text{[Chemical Formula 3]} \qquad Li_aNi_xCO_yQ^1_{1-x-y}O_2$$

In Chemical Formula 3,
$0.9 \le a \le 1.05$, $0.6 \le x \le 0.98$, $0.01 \le y \le 0.40$, and $Q^1$ is at least one metal element selected from Mn, Al, Cr, Fe, V, Mg, Nb, Mo, W, Cu, Zn, Ga, In, La, Ce, Sn, Zr, Te, Ru, Ti, Pb, and Hf.

$$\text{[Chemical Formula 4]} \qquad Li_aNi_xQ^2_{1-x}O_2$$

In Chemical Formula 4,
$0.9 \le a \le 1.05$, $0.6 \le x \le 1.0$, and $Q^2$ is at least one metal element selected from Mn, Al, Cr, Fe, V, Mg, Nb, Mo, W, Cu, Zn, Ga, In, La, Ce, Sn, Zr, Te, Ru, Ti, Pb, and Hf.

The nickel-based lithium metal oxide may be a nickel-based lithium metal oxide when the compound includes a metal.

In an embodiment, the nickel-based lithium metal oxide may further include at least one element selected from calcium (Ca), strontium (Sr), boron (B), and fluorine (F). If the positive electrode is fabricated using the nickel-based lithium metal oxide that further includes these elements, electrochemical characteristics of the rechargeable lithium battery may be further improved. A content of the elements may be about 0.001 mol to about 0.1 mol relative to 1 mol of the metals.

The nickel-based lithium metal oxide may have a layered $\alpha$-NaFeO$_2$ structure in which $Ni_xCo_yQ^1_{1-x-y}O_2$ or $Ni_xQ^2_{1-x}O_2$ and a Li layer are successively intersected, and may have an R-3m space group.

In an embodiment, sizes of primary particles and secondary particles of the positive active material may be adjusted to reduce a gas generation amount at a high voltage and secure reliability and safety during manufacture of a rechargeable lithium battery using the same.

In the positive active material, the primary particles may have a particle diameter of, for example, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, greater than or equal to about 900 nm, greater than or equal to about 1 $\mu$m, greater than or equal to about 1.5 $\mu$m, greater than or equal to about 2 $\mu$m, or greater than or equal to about 2.5 $\mu$m and less than or equal to about 5 $\mu$m, less than or equal to about 4.5 $\mu$m, less than or equal to about 4 $\mu$m, less than or equal to about 3.5 $\mu$m, or less than or equal to about 3 $\mu$m.

As for the secondary particles, small secondary particles may have an particle diameter of, for example, greater than or equal to about 5 $\mu$m and less than about 8 $\mu$m, or greater than or equal to about 5 $\mu$m and less than or equal to about 7.5 $\mu$m, or greater than or equal to about 5 $\mu$m and less than or equal to about 7 $\mu$m, or greater than or equal to about 5 $\mu$m and less than or equal to about 6.5 $\mu$m, or greater than or equal to about 5 $\mu$m and less than or equal to about 6 $\mu$m.

The large secondary particles may have a particle diameter of, for example, greater than or equal to about 8 $\mu$m and less than or equal to about 20 $\mu$m, or greater than or equal to about 8 $\mu$m and less than or equal to about 18 $\mu$m, or greater than or equal to about 8 $\mu$m and less than or equal to about 16 $\mu$m, or greater than or equal to about 10 $\mu$m and less than or equal to about 20 $\mu$m, or greater than or equal to about 12 $\mu$m and less than or equal to about 20 $\mu$m, or greater than or equal to about 14 $\mu$m and less than or equal to about 20 $\mu$m.

When the small secondary particles have an particle diameter within the ranges, active mass density of an electrode plate may be increased, and safety of a rechargeable lithium battery may be improved, but when the large secondary particles have an particle diameter within the range, active mass density of a positive electrode plate may be increased, or high rate capability may be improved.

In an embodiment, the secondary particles may be the small secondary particles having an particle diameter of greater than or equal to about 5 $\mu$m and less than about 8 $\mu$m, the large secondary particles having an particle diameter of greater than or equal to about 8 $\mu$m and less than or equal to about 20 $\mu$m, or a mixture thereof. When the secondary particles are the mixture of the small secondary particles having an particle diameter of greater than or equal to about 5 $\mu$m and less than about 8 $\mu$m and the large secondary particles having an particle diameter of greater than or equal to about 8 $\mu$m and less than or equal to about 20 $\mu$m, a mixing weight ratio thereof may be about 10:90 to about 30:70, for example, about 20:80 to about 15:85.

When the secondary particles are the mixture of the aforementioned small and large secondary particles, a high-capacity cell may be obtained by overcoming a capacity limit per volume of the positive active material and maintaining excellent active mass density of the positive electrode plate. The active mass density of the positive electrode plate may be, for example about 3.9 g/cm$^3$ to about 4.1 g/cm$^3$. This active mass density of the positive electrode plate is higher than about 3.3 g/cm$^3$ to about 3.5 g/cm$^3$ of active mass density of the electrode plate including a commercially-available nickel-based lithium metal oxide and accordingly, may increase capacity per volume.

In an embodiment, a (003) peak may have a full width at half maximum ranging about 0.120 ° to about 0.125 ° in an X-ray diffraction spectrum analysis of the nickel-based lithium metal oxide. In addition, the positive active material may have a (104) peak showing a full width at half maximum of about 0.105 ° to about 0.110 ° and a (110) peak showing a full width at half maximum of about 0.110 ° to about 0.120 °. These full widths at half maximum exhibit crystallinity of the nickel-based lithium metal oxide.

In general, the nickel-based lithium metal oxide exhibits a full width at half maximum of the (003) peak within a range of about 0.130 ° to about 0.150 ° in the X-ray diffraction analysis spectrum. The lower the full width at half maximum is, the higher the crystallinity of the nickel-based lithium metal oxide is. Accordingly, the nickel-based lithium metal oxide according to an embodiment of the present invention exhibits high crystallinity compared with the general nickel-based lithium metal oxide. In this way, when the nickel-based lithium metal oxide having higher crystallinity is used as a positive active material, a rechargeable lithium battery securing safety at a high voltage may be manufactured.

In the nickel-based lithium metal oxide, a percentage (cation mixing ratio) of nickel ions occupying a lithium site may be less than or equal to about 1.0 atom%, for example, about 0.0001 atom% to about 0.3 atom%. In a high-temperature firing process, Ni ions (Ni$^{2+}$) having a similar ion radius (an ion radius: about 0.83 Å) to that of lithium ions (Li$^+$) (an ion radius: about 0.90 Å) are mingled into a lithium ion-diffusing surface and thus tends to be more possibly prepared into a nonstoichiometric composition of $[Li_{1-x}Ni_x]_{3b}[Ni]_{3a}[O_2]_{6c}$ (wherein a, b, and c indicate site positions of a structure, and x indicates the number of the Ni ions moving toward the Li site, $0 \leq x < 1$), and accordingly, when Ni$^{2+}$ is mixed into the lithium site, the site may be a locally irregularly-aligned rock-salt layer (Fm3m) and thus is not only electrochemically inactive but also hinders the lithium ions of a lithium layer from solid-phase diffusion and thus suppresses a battery reaction.

The nickel-based lithium metal oxide may have improved battery characteristics by suppressing such a cation mixing ratio.

The crystal structure of the positive active material may include a hexagonal crystal structure according to the XRD analysis, and an a-axis may have a length of about 2.867 Å to about 2.889 Å, a c-axis may have a length of about 14.228 Å to about 14.270 Å, and accordingly, a unit lattice (unit cell) volume may be in a range of about 101.35 Å$^3$ to about 102.98 Å$^3$.

The XRD analysis may be performed by using a CuK-alpha ray (X-ray wavelength: about 1.541 Å) as a light source.

The positive active material according to an embodiment may suppress a surface side-reaction of residual lithium with an electrolyte solution by adjusting a mixing weight ratio of lithium relative to a metal and controlling a heat-treatment condition (a heat-treatment temperature, an atmosphere, and a time) during the preparation process of the positive active material to adjust sizes of the primary particles and/or the secondary particles of the positive active material and thus reducing a specific surface area and removing the residual lithium at most. As described above, when the manufacturing process may be controlled, crystallinity of the positive active material may be improved, and stability thereof may be secured.

In the positive active material, a content of the residual lithium may be less than or equal to about 0.1 wt%. For example, a content of LiOH may be in a range of about 0.01 wt% to about 0.06 wt%, and a content Li$_2$CO$_3$ may be in a range of about 0.05 wt% to about 0.1 wt%. Herein, the contents of LiOH and Li$_2$CO$_3$ may be measured in a titration method.

In the positive active material, a content of the lithium carbonate (Li$_2$CO$_3$) through a GC-MS analysis may be in a range of about 0.01 wt% to about 0.05 wt%.

As described above, when the content of the residual lithium is small, a side-reaction of the residual lithium with an electrolyte solution may be suppressed, and gas generation at a high voltage and a high temperature may be suppressed, and accordingly, the positive active material may exhibit excellent safety. In addition, when the content of LiOH is small, pH of the positive electrode slurry is decreased during the manufacturing process, and accordingly, the positive electrode slurry may be stable and thus accomplish uniform electrode plate coating. This LiOH decrease may secure slurry stability during the slurry manufacturing process for the positive electrode coating.

The positive active material may exhibit characteristics of a high onset point temperature of about 250 °C to about 270 °C compared with that of conventional commercially-available nickel-based lithium metal oxide (e.g., NCM) in a differential scanning calorimetry analysis and a decreased instantaneous heat release rate of a main peak. The positive active material exhibits these characteristics and thus may realize high temperature safety of a lithium ion rechargeable battery.

Since the aforementioned positive active material suppresses the side-reaction of the nickel-based lithium metal oxide with an electrolyte solution, thermal stability and structural stability of the nickel-based lithium metal oxide are improved, and thus stability and charge and discharge characteristics of a rechargeable lithium battery including the positive active material may be improved.

Hereinafter, a method of preparing the positive active material according to an embodiment is described.

The method of preparing the positive active material includes

mixing a first precursor for forming lithium-metal (M) oxide and a second precursor for forming nickel-based lithium metal oxide having a layered crystal structure with a solvent to obtain a precursor composition,

adding a surfactant to the precursor composition, and

first heat-treating the resultant (mixture) in a sealed state and drying to produce a positive active material precursor, and mixing the positive active material precursor with a lithium precursor followed by second heat-treating to produce the positive active material.

First, the positive active material precursor composition is obtained by mixing the first precursor for forming the lithium-metal (M) oxide and the second precursor for forming the nickel-based lithium metal oxide having a layered crystal structure, with a solvent. Herein, water or alcohols may be used as the solvent, and the alcohol may include ethanol, methanol, isopropanol, or the like.

The contents of the first precursor for forming the lithium-metal (M) oxide and the second precursor for forming the nickel-based lithium metal oxide may be properly adjusted to obtain the positive active material having a desired composition.

Subsequently, the surfactant is added to the precursor composition, first heat-treating is performed in a closed and sealed state, and then the resultant (mixture) is dried to prepare the positive active material precursor.

The surfactant may be a non-ionic surfactant. The surfactant may include a vinyl-based polymer having a weight average molecular weight (Mw) of about 20,000 to about 50,000, for example about 25,000 to about 45,000. Specific examples of the vinyl-based polymer may include polyvinyl alcohol (PVA), polyvinylpyrrolidone (PVP), or a derivative thereof. As the derivative of polyvinyl alcohol, the hydroxyl group of polyvinyl alcohol is replaced by an acetyl group, an acetal group, a formyl group, a butyral group, etc. The derivative of polyvinylpyrrolidone may include a vinylpyrrolidone-vinyl acetate copolymer, a vinylpyrrolidone-vinylalcohol copolymer, and a vinylpyrrolidone-vinylmelamine copolymer.

The first heat-treating may be for example performed at a temperature of about 150°C to about 550°C, for example, about 150°C to about 500°C, about 150°C to about 450°C, about 150°C to about 400°C, about 150°C to about 350°C, about 150°C to about 300°C, about 150°C to about 250°C, about 150°C to about 230°C, about 150°C to about 200°C for about 5 hours to 15 hours under a high pressure. By the first heat-treating, dispersion including the positive active material precursor dispersed in the solvent may be obtained.

The dispersion is dried to prepare a positive active material precursor in a powder state. The dispersion may be dried at about 50°C to about 100°C for about 8 hours to about 12 hours in a vacuum oven.

Before the dispersion is dried, a solvent may be further added to the dispersion and the obtained mixture may be centrifuged in order to remove impurities (referred to as a washing process). Herein the solvent may be water, alcohol (for example, ethanol, methanol, or isopropanol), and the like. The centrifuging process may be performed at about 5,000 rpm to about 8,000 rpm for about 5 to about 15 minutes. The washing process may be performed twice to ten times.

Subsequently, the prepared positive active material precursor is mixed with the lithium precursor and then, second heat-treated to prepare a positive active material for a rechargeable lithium battery.

For example, when the first precursor for forming the lithium-metal (M) oxide is included in an amount of x mole ($0 < x \leq 0.05$, $0 < x \leq 0.04$, $0 < x \leq 0.03$, $0.01 < x \leq 0.05$, $0.02 < x \leq 0.05$, or $0.02 < x \leq 0.03$), an amount of the second precursor for forming the nickel-based lithium metal oxide having the layered crystal structure is (1-x) mole, and an amount of the lithium precursor may be adjusted to have a mixing ratio of about 1.03(1+x) mole.

The second heat-treating may be performed under an oxygen ($O_2$) atmosphere at a temperature of about 600 °C to about 950°C, for example greater than or equal to about 600°C, greater than or equal to about 610°C, greater than or equal to about 620°C, greater than or equal to about 630°C, greater than or equal to about 640°C, greater than or equal to about 650°C, greater than or equal to about 660°C, greater than or equal to about 670°C, greater than or equal to about 680°C, greater than or equal to about 690°C or greater than or equal to about 700°C and less than or equal to about 950°C, less than or equal to about 940°C, less than or equal to about 930°C, less than or equal to about 920°C, less than or equal to about 910°C, less than or equal to about 900°C, less than or equal to about 890°C, less than or equal to about 880°C, less than or equal to about 870°C, less than or equal to about 860°C, or less than or equal to about 850°C, for about 5 hours to about 15 hours. In an embodiment, when a nickel amount is less than or equal to about 70 mol% based on a total amount of metals of the nickel-based lithium metal oxide, the second heat-treating may be performed at greater than or equal to about 700°C, greater than or equal to about 710°C, greater than or equal to about 720°C, greater than or equal to about 730°C, greater than or equal to about 740°C, or greater than or equal to about 750°C. In another embodiment, when the nickel amount is greater than about 70 mol% based on a total amount of the metals of the nickel-based lithium metal oxide, the second heat-treating may be performed at greater than or equal to about 650°C, greater than or equal to about 660°C, greater than or equal to about 670°C, greater than or equal to about 680°C, greater than or equal to about 690°C, or greater than or equal to about 700°C and less than or equal to about 800°C, less than or equal to about 790°C, less than or equal to about 780°C, less than or equal to about 770°C, less than or equal to about 760°C, or less than or equal to about 750°C.

When the second heat-treating is performed within the range, phase-separation of the lithium-metal oxide may easily occur, and the coating layer including the lithium-metal oxide may be stably formed.

During the second heat-treating, a temperature-increasing rate may be less than or equal to about 5°C/min, less than or equal to about 4°C/min, less than or equal to about 3°C/min, less than or equal to about 2°C/min, or less than or equal to about 1°C/min. When the second heat-treating is performed within the range, phase-separation of the lithium-metal oxide may easily occur, and the coating layer including the lithium-metal oxide may be stably formed.

The method may further include cooling after the second heat-treating. The cooling may be performed at a cooling rate that is less than or equal to about 5°C/min, less than or equal to about 4°C/min, less than or equal to about 3°C/min, less than or equal to about 2°C/min, or less than or equal to about 1°C/min.

The method may further include additional heat-treating after the second heat-treating. The additional heat-treating may further stabilize the structure of the coating layer including lithium-metal oxide.

In the method, the first precursor for forming lithium-metal (M) oxide may include a metal (M)-containing halide, a metal (M)-containing sulfate, a metal (M)-containing hydroxide, a metal (M)-containing nitrate, a metal (M)-containing carboxylate, a metal (M)-containing oxalate, or a combination thereof. Specific examples thereof may include tin chloride ($SnCl_2$), zirconium chloride ($ZrCl_4$), tellurium chloride ($TeCl_4$), ruthenium chloride ($RuCl_4$), titanium chloride ($TiCl_4$), manganese chloride ($MnCl_4$), hafnium chloride ($HfCl_4$), lead chloride ($PbCl_4$), tin sulfate ($SnSO_4$), zirconium sulfate ($Zr(SO_4)_2$), tellurium sulfate ($Te(SO_4)_2$), ruthenium sulfate ($Ru(SO_4)_2$), titanium sulfate ($Ti(SO_4)_2$), manganese sulfate ($Mn(SO_4)_2$), hafnium sulfate ($Hf(SO_4)_2$), lead sulfate ($Pb(SO_4)_2$), tin hydroxide, zirconium hydroxide, tellurium hydroxide, ruthenium hydroxide, titanium hydroxide, manganese hydroxide, hafnium hydroxide, lead hydroxide, zirconium nitrate, zirconium acetate, zirconium oxalate, tellurium nitrate, tellurium acetate, tellurium oxalate, tellurium chloride, ruthenium nitrate, ruthenium acetate, ruthenium oxalate, titanium nitrate, titanium acetate, titanium oxalate, manganese nitrate, manganese acetate, manganese oxalate, hafnium nitrate, hafnium acetate, hafnium oxalate, or a combination thereof.

The second precursor for forming the nickel-based lithium metal oxide having the layered crystal structure may include for example $Ni(OH)_2$, $NiO$, $NiOOH$, $NiCO_3·2Ni(OH)_2·4H_2O$, $NiC_2O_4·2H_2O$, $Ni(NO_3)_2·6H_2O$, $NiSO_4$, $NiSO_4·6H_2O$, a nickel fatty acid salt, a nickel halide, or a combination thereof.

The second precursor for forming the nickel-based lithium metal oxide having the layered crystal structure may essentially include a nickel precursor, and may further include one or more metal precursor selected from a cobalt precursor, a manganese precursor, and an aluminium precursor.

The cobalt precursor may include one or more of $Co(OH)_2$, $CoOOH$, $CoO$, $Co_2O_3$, $Co_3O_4$, $Co(OCOCH_3)_2·4H_2O$, $CoCl_2$, $Co(NO_3)_2·6H_2O$, and $Co(SO_4)_2·7H_2O$.

The manganese precursor may include one or more of manganese oxide such as $Mn_2O_3$, $MnO_2$, and $Mn_3O_4$, manganese salts such as $MnCO_3$, $Mn(NO_3)_2$, $MnSO_4$, manganese acetate, manganese dicarboxylate, manganese citrate, manganese oxy hydroxide, and manganese fatty acid salts, and manganese halide such as and manganese chloride.

The aluminium precursor may include aluminium nitrate ($Al(NO_3)_3$), aluminium hydroxide ($Al(OH)_3$), aluminium sulfate, and the like.

The lithium precursor may include a lithium hydroxide, a lithium nitrate, a lithium carbonate, a lithium acetate, a lithium sulfate, a lithium chloride, a lithium fluoride, or a mixture thereof.

When the prepared positive active material is used, a positive electrode having excellent chemical stability under a high temperature charge and discharge condition and a rechargeable lithium battery having excellent power output characteristics by using this positive electrode may be manufactured.

Hereinafter, a process of manufacturing a rechargeable lithium battery by using the above positive active material as a positive active material for a rechargeable lithium battery is examined, and herein, a method of manufacturing the rechargeable lithium battery having a positive electrode, a negative electrode, a lithium salt-containing non-aqueous electrolyte, and a separator is illustrated.

The positive electrode and negative electrode are fabricated by coating and drying each composition for forming a positive active material layer and a composition for forming a negative active material layer on a current collector, respectively.

The positive active material forming composition is prepared by mixing a positive active material, a conductive agent, a binder, and a solvent. The positive active material according to an embodiment is used as the positive active material.

The binder may help binding of active materials, conductive agent, and the like and binding them on a current collector, and may be added in an amount of about 1 to about 50 parts by weight based on a total weight, 100 parts by weight of the positive active material. Non-limiting examples of such a binder may be polyvinylidene fluoride, polyvinyl alcohol, carboxylmethyl cellulose (CMC), starch, hydroxypropyl cellulose, recycled cellulose, polyvinylpyrrolidone, polytetrafluoroethylene, polyethylene, polypropylene, an ethylene-propylene-diene terpolymer (EPDM), sulfonated EPDM, a styrene butadiene rubber, a fluorine rubber, various copolymers, and the like. The amount thereof may be about 1 part by weight to about 5 parts by weight based on a total weight, 100 parts by weight of the positive active material. When the amount of the binder is within the range, the binding force of the active material layer to the current collector is good.

The conductive agent is not particularly limited as long as it does not cause a chemical change of a battery and has conductivity and may be for example, graphite such as natural graphite or artificial graphite; a carbon-based material such as carbon black, acetylene black, ketjen black, channel black, furnace black, lamp black, summer black and the like; a conductive fiber such as a carbon fiber or a metal fiber, and the like; carbon fluoride; a metal powder such as an aluminium or nickel powder; zinc oxide, a conductive whisker such as potassium titanate, and the like; a conductive metal oxide such as a titanium oxide; a conductive material such as a polyphenylene derivative, and the like.

The amount of the conductive agent may be about 1 part by weight to about 5 parts by weight based on a total weight, 100 parts by weight of the positive active material. When the amount of the conductive agent is within the range, conductivity characteristics of the resultant electrode are improved.

Non-limiting examples of the solvent may be N-methyl pyrrolidone, and the like.

The amount of the solvent may be about 10 parts by weight to about 200 parts by weight based on 100 parts by weight of the positive active material. When the amount of the solvent is within the range, the work for forming the active material layer may become easy.

The positive current collector may have a thickness of about 3 $\mu$m to about 500 $\mu$m, is not particularly limited as long as it does not cause a chemical change in the battery and has high conductivity, and may be for example, stainless steel, aluminium, nickel, titanium, heat-treated carbon, or aluminium or stainless steel of which the surface is treated with carbon, nickel, titanium, or silver. The current collector may have fine irregularities formed on a surface thereof to increase adhesive force of the positive active material, and various forms such as a film, a sheet, a foil, a net, a porous body, foam, or a non-woven fabric body.

Separately, a negative active material, a binder, a conductive agent, and a solvent are mixed to prepare a composition for a negative active material layer.

The negative active material may use a material capable of intercalating and deintercalating lithium ions. Non-limiting examples of the negative active material may be a carbon-based material such as graphite or carbon, a lithium metal, an alloy thereof, a silicon oxide-based material, and the like. According to an embodiment of the present invention, silicon oxide may be used.

The binder may be added in an amount of about 1 part by weight to about 50 parts by weight based on a total weight, 100 parts by weight of the negative active material. Non-limiting examples of the binder may be the same as the positive electrode.

The conductive agent may be used in an amount of about 1 part by weight to about 5 parts by weight based on a total weight, 100 parts by weight of the negative active material. When the amount of the conductive agent is within the range, conductivity characteristics of the resultant electrode are improved.

An amount of the solvent may be about 10 part by weight to about 200 parts by weight based on a total weight, 100 parts by weight of the negative active material. When the amount of the solvent is within the range, the work for forming the negative active material layer may become easy.

The conductive agent and the solvent may use the same materials as those used in manufacturing the positive electrode.

The negative current collector may have a thickness of about 3 $\mu$m to about 500 $\mu$m. Such a negative current collector is not particularly limited as long as it does not cause a chemical change in the battery and has high conductivity and may be for example, copper, stainless steel, aluminium, nickel, titanium, heat-treated carbon, copper, or stainless steel of which the surface is treated with carbon, nickel, titanium, or silver, an aluminium-cadmium alloy, and the like. In addition, it may have fine irregularities formed on a surface thereof to increase adhesive force of the negative active materials, and various forms such as a film, a sheet, a foil, a net, a porous body, foam, or a non-woven fabric body, like the positive current collector.

A separator is disposed between the positive electrode and the negative electrode manufactured according to the above processes.

The separator may generally have a pore diameter of about 0.01 $\mu$m to about 10 $\mu$m and a thickness of about 5 $\mu$m to about 300 $\mu$m. Specific examples may be an olefin-based polymer such as polypropylene, polyethylene, and the like; or a sheet or a nonwoven fabric formed of a glass fiber. In the case that a solid electrolyte such as a polymer is used as the electrolyte, the solid electrolyte may also serve as the separator.

A lithium salt-containing non-aqueous electrolyte may be composed of a non-aqueous electrolyte and a lithium salt. The non-aqueous electrolyte may be a non-aqueous electrolyte, an organic solid electrolyte, or inorganic solid electrolyte.

The non-aqueous electrolyte may be for example aprotic organic solvents such as N-methyl-2-pyrrolidinone, propylene carbonate, ethylene carbonate, butylene carbonate, dimethyl carbonate, diethyl carbonate, gamma-butyro lactone, 1,2-dimethoxyethane, 2-methyl tetrahydrofuran, dimethylsulfoxide, 1,3-dioxolane, N,N-formamide, N,N-dimethyl formamide, acetonitrile, nitromethane, methyl formate, methyl acetate, trimethoxymethane, dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like.

The organic solid electrolyte may be for example a polyethylene derivative, a polyethylene oxide derivative, a polypropylene oxide derivative, a phosphoric acid ester polymer, polyvinyl alcohol, polyvinylidene fluoride, and the like

The inorganic solid electrolyte may be for example $Li_3N$, $LiI$, $Li_5NI_2$, $Li_3N$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$, and the like.

The lithium salt may be a material which is readily soluble in the non-aqueous electrolyte, and for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, $(FSO_2)_2NLi$, lithium chloroborate, lower aliphatic lithium carbonate, tetraphenyl lithium borate, and the like

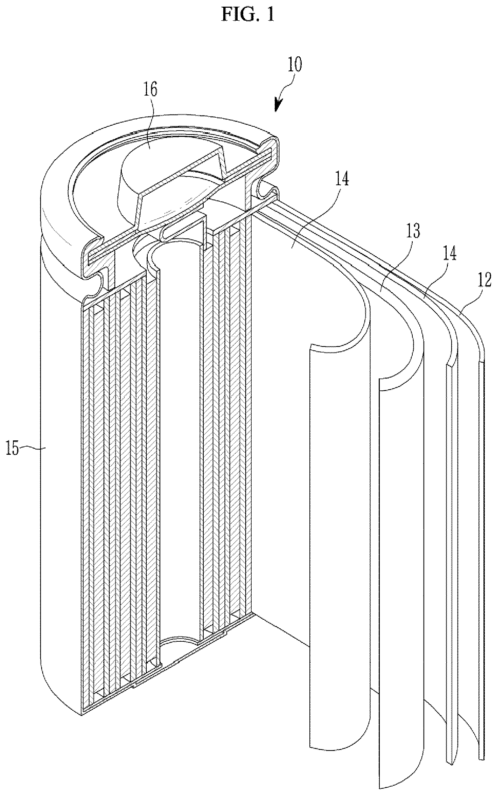

FIG. 1 is a perspective view schematically showing a representative structure of a rechargeable lithium battery according to an embodiment.

Referring to FIG. 1, a rechargeable lithium battery 10 includes a positive electrode 13 including the positive active material, a negative electrode 12, and a separator 14 disposed between the positive electrode 13 and the negative electrode 12, an electrolyte (not shown) impregnated in the positive electrode 13, negative electrode 12, and separator 14, a battery case 15, and a cap assembly 16 sealing the battery case 5. The lithium secondary battery 10 may be fabricated by sequentially stacking the positive electrode 13, negative electrode 12, and separator 14 and spiral-winding them and housing the wound product in the battery case 15. The battery case 15 is sealed with the cap assembly 16 to complete the rechargeable lithium battery 10.

The rechargeable lithium battery may be used for a battery cell used as a power source for small devices due to improved power output characteristics, as well as a unit battery in a medium/large battery pack or a battery module including a plurality of battery cells used as a power source for medium/large devices.

Examples of the medium/large devices may include electric vehicles including electric vehicles (EVs), hybrid electric vehicles (HEVs), plug-in hybrid electric vehicles (PHEVs), and the like, electric motorcycle power tools including electric bicycles (E-bikes), electric scooters (E-scooters), and the like, but is not limited thereto.

Hereinafter, the embodiments are illustrated in more detail with reference to examples. These examples, however, are not in any sense to be interpreted as limiting the scope of the invention.

**Examples**

**(Preparation of Positive Active Material)**

**Synthesis Example 1**

$Ni(NO_3)_2 \cdot 6H_2O$, $Co(NO_3)2 \cdot 6H_2O$, $Al(NO_3)_3 \cdot 9H_2O$, and $SnCl_2$ were respectively mixed in a mole ratio of 0.76:0.1425:0.0475:0.05 and then, dissolved in 60 ml of a mixed solvent of water:ethanol = 1:1 (v/v) to prepare a precursor composition.

0.3 g of polyvinylpyrrolidone (PVP, Mw = 29,000 g/mol) as a surfactant was dissolved in the precursor composition, the solution was put in a 100 ml Teflon-lined autoclave, and the autoclave was sealed.

The completely-sealed autoclave was heat-treated at 180 °C in a convection oven for 10 hours to obtain a dispersion including a $[Ni_{0.80}Co_{0.15}Al_{0.05}]_{0.95}Sn_{0.05}(OH)_2$ precursor.

Water and ethanol were added to the dispersion and then, the mixture was centrifuged at 7000 rpm for 10 minutes for washing. The washing was performed by respectively 4 times using the water and the ethanol to obtain a powder.

The washed powder was dried at 80 °C for 10 hours in a vacuum oven to obtain $[Ni_{0.80}Co_{0.15}Al_{0.05}]_{0.95}Sn_{0.05}(OH)_2$ precursor powder.

The $[Ni_{0.80}Co_{0.15}Al_{0.05}]_{0.95}Sn_{0.05}(OH)_2$ precursor powder was mixed with $LiOH \cdot H_2O$ powder in a mole ratio of 1:1.08.

A temperature was increased up to 750 °C, and the mixed powder was fired (second heat-treated) at 750 °C for 10 hours under an $O_2$ atmosphere, and then was cooled to obtain a $Li[Ni_{0.80}Co_{0.15}Al_{0.05}]O_2$ positive active material that was coated with $Li_2SnO_3$. Herein, a temperature-increasing rate was set at 5 °C/min, and a cooling rate was set at 1 °C/min.

The positive active material included secondary particle in which a plurality of primary particles were agglomerated. The particle diameter of the primary particles was 1.2 μm, and the particle diameter (D50) of the secondary particles was 8.59 μm.

**Synthesis Example 2**

A $Li[Ni_{0.80}Co_{0.15}Al_{0.05}]O_2$ positive active material was obtained according to the same method as Synthesis Example 1 except that the mixed powder of the $[Ni_{0.80}Co_{0.15}Al_{0.05}]_{0.95}Sn_{0.05}(OH)_2$ precursor powder and the $LiOH \cdot H_2O$ powder was fired at 780 °C for 10 hours under an $O_2$ atmosphere.

The positive active material included secondary particle in which a plurality of primary particles were agglomerated. The particle diameter of the primary particles was 1.3 μm, and the particle diameter (D50) of the secondary particles was 10.58 μm.

**Synthesis Example 3**

$Ni(NO_3)_2 \cdot 6H_2O$, $Co(NO_3)_2 \cdot 6H_2O$, $Mn(NO_3)_3 \cdot 4H_2O$, and $SnCl_2$ were respectively mixed in a mole ratio of 0.76:0.095:0.095:0.05 and then, dissolved in 60 ml of a mixed solvent of water:ethanol = 1:1 (v/v) to prepare a precursor composition.

In the precursor composition, 0.3 g of polyvinylpyrrolidone (PVP, Mw = 29,000 g/mol) as a surfactant was dissolved, the solution was put in a 100 ml Teflon-lined autoclave, and the autoclave was sealed.

The completely sealed autoclave was first heat-treated at 180 °C for 10 hours in a convection oven to obtain dispersion including a $[Ni_{0.80}Co_{0.1}Mn_{0.1}]_{0.95}Sn_{0.05}(OH)_2$ precursor.

The dispersion was dispersed in water and ethanol and then, centrifuged at 7000 rpm for 10 minutes for washing. The washing was performed by respectively four times using the water and the ethanol.

The washed powder was dried at 80 °C for 10 hours in a vacuum oven to obtain $[Ni_{0.8}Co_{0.1}Mn_{0.1}]_{0.95}Sn_{0.05}(OH)_2$ precursor powder.

The $[Ni_{0.8}Co_{0.1}Mn_{0.1}]_{0.95}Sn_{0.05}(OH)_2$ precursor powder was mixed with $LiOH \cdot H_2O$ powder in a mole ratio of 1:1.08.

A temperature was increased up to 800 °C, and the mixed powder was fired (second heat-treated) at 800 °C for 10 hours under an $O_2$ atmosphere, and then was cooled to obtain a $Li[Ni_{0.8}Co_{0.1}Mn_{0.1}]O_2$ positive active material that was plane-selectively coated with $Li_2SnO_3$. Herein, a temperature-increasing rate was set at 5 °C/min, and a cooling rate was set at 1 °C/min.

The positive active material included secondary particle in which a plurality of primary particles were agglomerated. The particle diameter of the primary particles was 900 nm, and the particle diameter (D50) of the secondary particles was 5.19 μm.

**Synthesis Example 4**

A $Li[Ni_{0.8}Co_{0.1}Mn_{0.1}]O_2$ positive active material was obtained according to the same method as Synthesis Example 3 except that the mixed powder of the $[Ni_{0.8}Co_{0.1}Mn_{0.1}]_{0.95}Sn_{0.05}(OH)_2$ precursor powder and the $LiOH \cdot H_2O$ powder was fired at 780 °C for 10 hours under an $O_2$ atmosphere.

The positive active material included secondary particle in which a plurality of primary particles were agglomerated. The particle diameter of the primary particles was 900 nm, and the particle diameter (D50) of the secondary particles was 5.15 μm.

**Synthesis Example 5**

A $Li[Ni_{0.80}Co_{0.15}Al_{0.05}]O_2$ positive active material was obtained according to the same method as Synthesis Example 1 except that 0.6 g of polyvinylpyrrolidone (PVP) was used.

The positive active material included secondary particle in which a plurality of primary particles were agglomerated. The particle diameter of the primary particles was 1.2 μm, and the particle diameter (D50) of the secondary particles was 9.87 μm.

**Comparative Synthesis Example 1**

$Ni(NO_3)_2 \cdot 6H_2O$, $Co(NO_3)_2 \cdot 6H_2O$, $Al(NO_3)_3 \cdot 9H_2O$, and $LiNO_3$ were respectively mixed in a mole ratio of 1.03:0.80:0.15:0.05 and then, dissolved in an ethanol solvent to prepare a precursor composition.

In the precursor composition, citric acid as a chelating agent was dissolved in a mole ratio of 1:1 with a total amount of cations present in the precursor composition.

The precursor composition was stirred until all the solvents of the precursor composition were removed, obtaining gel.

The obtained gel was fired at 300 °C for 5 hours in the air to obtain powder.

A temperature was increased up to 750 °C, and the mixed powder was fired at 750 °C for 10 hours under an $O_2$ atmosphere, and then was cooled to obtain a positive active material, $Li[Ni_{0.80}Co_{0.15}Al_{0.05}]O_2$. Herein, a temperature-increasing rate was set at 5 °C/min, and a cooling rate was set at 1 °C/min.

The positive active material included secondary particle in which a plurality of primary particles were agglomerated. The particle diameter of the primary particles was 300 nm, and the particle diameter (D50) of the secondary particles was 7.78 μm.

**Comparative Synthesis Example 2**

$Ni(NO_3)_2 \cdot 6H_2O$, $Co(NO_3)_2 \cdot 6H_2O$, and $Mn(NO_3)_3 \cdot 4H_2O$ were respectively mixed in a mole ratio of 0.8:0.1:0.1 and then, dissolved in 60 ml of a mixed solvent of water:ethanol = 1:1 (v/v) to prepare a precursor composition.

In the precursor composition, 0.3 g of polyvinylpyrrolidone (PVP, Mw = 29,000 g/mol) as a surfactant was dissolved and then, put in a 100 ml Teflon-lined autoclave, and the autoclave was sealed.

The completely sealed autoclave was first heat-treated at 180 °C for 10 hours in a convection oven to obtain dispersion including a $[Ni_{0.8}Co_{0.1}Mn_{0.1}](OH)_2$ precursor.

The dispersion was dispersed in water and ethanol and then, centrifuged at 7000 rpm for 10 minutes for washing. The washing was performed by respectively 4 times using the water and the ethanol.

The washed powder was dried at 80 °C for 10 hours in a vacuum oven to obtain $[Ni_{0.8}Co_{0.1}Mn_{0.1}](OH)_2$ precursor powder.

The $[Ni_{0.8}Co_{0.1}Mn_{0.1}](OH)_2$ precursor powder was mixed with $LiOH \cdot H_2O$ powder in a mole ratio of 1:1.03.

A temperature was increased up to 750 °C, and the mixed powder was fired at 750 °C for 10 hours under an $O_2$ atmosphere, and then was cooled to obtain a single-crystal positive active material, $Li[Ni_{0.8}Co_{0.1}Mn_{0.1}]O_2$. Herein, a temperature-increasing rate was set at 5 °C/min, and a cooling rate was set at 1 °C/min.

The positive active material included secondary particle in which a plurality of primary particles were agglomerated. The particle diameter of the primary particles was 500 nm, and the particle diameter (D50) of the secondary particles was 4.20 μm.

**Comparative Synthesis Example 3**

$LiNO_3$ and tin (IV) ethylhexanoisopropoxide ($Sn-(OOC_8H_{15})_2(OC_3H_7)_2$) in a mole ratio of 2:1 were dissolved in 2-propanol (IPA), and $Li[Ni_{0.80}Co_{0.15}Al_{0.05}]O_2$ according to Comparative Synthesis Example 1 was dispersed in the obtained coating solution and then, stirred at room temperature for about 20 hours to evaporate the solvent and obtain gel. The coating solution was used in an amount so that an amount of $Li_2SnO_3$ of a coating material might be 5 moles based on 100 moles of $Li[Ni_{0.80}Co_{0.15}Al_{0.05}]O_2$.

The obtained gel was fired at 150 °C for 10 hours to obtain powder.

A temperature was increased up to 700 °C, and the obtained powder was fired at 700 °C for 5 hours under an $O_2$ atmosphere, and then was cooled to obtain $Li[Ni_{0.80}Co_{0.15}Al_{0.05}]O_2$ coated with $Li_2SnO_3$. Herein, a temperature-increasing rate was set at 10 °C/min, and a cooling rate was set at less than or equal to about 1 °C/min.

The positive active material included secondary particle in which a plurality of primary particles were agglomerated. The particle diameter of the primary particles was 300 nm, and the particle diameter (D50) of the secondary particles was 8.32 μm.

**Comparative Synthesis Example 4**

$LiNO_3$ and tin (IV) ethylhexanoisopropoxide ($Sn-(OOC_8H_{15})_2(OC_3H_7)_2$) in a mole ratio of 2:1 were dissolved in 2-propanol (IPA), and $Li[Ni_{0.8}Co_{0.1}Mn_{0.1}]O_2$. according to Comparative Synthesis Example 2 was dispersed in the solution and then, stirred for about 20 hours at room temperature to evaporate the solvent and thus obtain gel. The coating solution was used in an amount so that an amount of $Li_2SnO_3$ of a coating material might be 5 moles based on 100 moles of $Li[Ni_{0.8}Co_{0.1}Mn_{0.1}]O_2$.

The obtained gel was fired at 150 °C for 10 hours to obtain powder.

A temperature was increased up to 700 °C, and the obtained powder was fired at 700 °C for 5 hours under an $O_2$ atmosphere, and then was cooled to obtain $Li[Ni_{0.8}Co_{0.1}Mn_{0.1}]O_2$ coated with $Li_2SnO_3$. Herein, a temperature-increasing rate was set at 10 °C/min, and a cooling rate was set at less than or equal to about 1 °C/min.

The positive active material included secondary particle in which a plurality of primary particles were agglomerated. The particle diameter of the primary particles was 500 nm, and the particle diameter (D50) of the secondary particles was 5.33 μm.

**(Manufacture of Rechargeable Lithium Battery Cell)**

**Example 1**

The positive active material for a rechargeable lithium battery according to Synthesis Example 1 was used to manufacture a coin cell.

The $Li[Ni_{0.80}Co_{0.15}Al_{0.05}]O_2$ positive active material according to Synthesis Example 1, Super-p (TIMCAL) as a conductive agent, and polyvinylidene fluoride (PVdF) as a binder were mixed in a mole ratio of 0.80:0.10:0.10, and N-methyl pyrrolidone (NMP) was added thereto and uniformly dispersed therein to prepare slurry for a positive active material layer.

The prepared slurry was coated on an aluminium foil by using a doctor blade to form a thin electrode plate and then, dried at 100 °C for greater than or equal to 3 hours and at 120 °C for 10 hours in a vacuum oven to remove moisture and thus manufacture a positive electrode.

The positive electrode and a lithium metal negative electrode were used to manufacture a 2032 type coin cell. Herein, a separator formed of a porous polyethylene (PE) film (a thickness: about 20 $\mu$m) was disposed between the positive electrode and the lithium metal counter electrode, and an electrolyte was injected thereinto to manufacture the coin cell.

Herein, the electrolyte was prepared by dissolving 1.3 M $LiPF_6$ in a mixed solvent of ethylene carbonate (EC), ethylmethyl carbonate (EMC), and dimethyl carbonate (DMC) in a volume ratio of 3:4:3.

**Examples 2 to 5**

Rechargeable lithium battery cells according to Examples 2 to 5 were manufactured according to the same method as Example 1 except that each positive active material according to Synthesis Examples 2 to 5 was used instead of the positive active material according to Synthesis Example 1.

**Comparative Examples 1 to 4**

Rechargeable lithium battery cells according to Comparative Synthesis Examples 1 to 4 were manufactured according to the same method as Example 1 except that each positive active material according to Comparative Synthesis Examples 1 to 4 was used instead of the positive active material according to Synthesis Example 1.

**Evaluation Example 1: XRD Analysis**

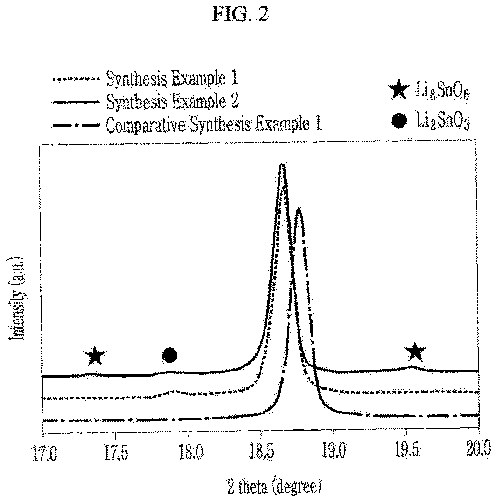

An XRD analysis of each positive active material according to Synthesis Examples 1 and 2 and Comparative Synthesis Example 1 was performed. The XRD analysis was performed by using a Bruker D8 advance X-ray diffractometer with Cu K$\alpha$ radiation ($\lambda$=1.5406 Å), and the XRD analysis results are shown in FIG. 2.

Referring to FIG. 2, the positive active material according to Synthesis Example 1 exhibited formation of $Li_2SnO_3$, and the positive active material according to Synthesis Example 2 exhibited formation of $Li_2SnO_3$ and $Li_8SnO_6$. On the contrary, the positive active material of Comparative Synthesis Example 1 did not exhibit peaks corresponding to $Li_2SnO_3$ and $Li_8SnO_6$. Accordingly, referring to the XRD analysis result of FIG. 2, compositions of the lithium-metal oxide may be adjusted by controlling a firing temperature during the preparation process of the positive active materials.

**Evaluation Example 2: STEM-EDS Analysis**

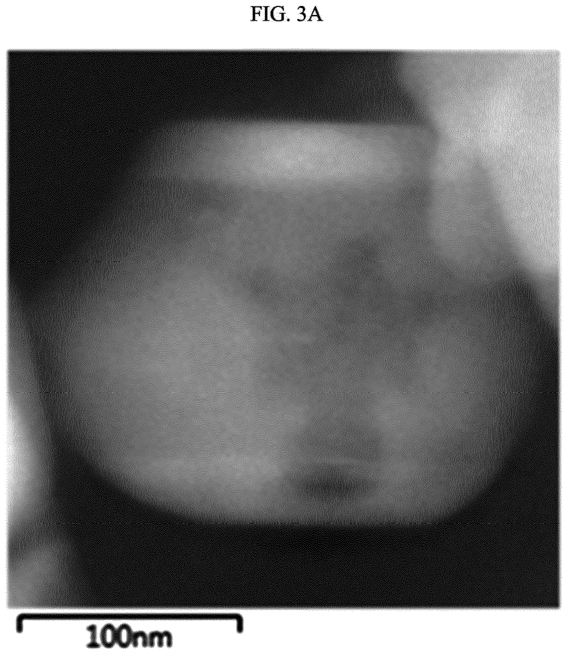

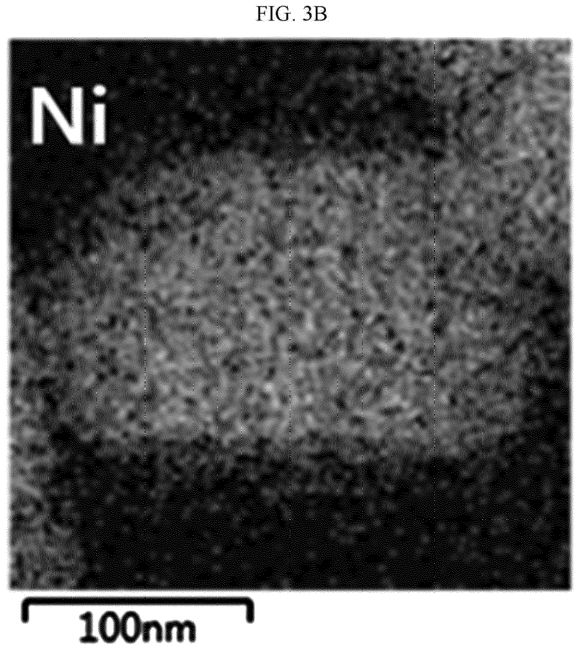

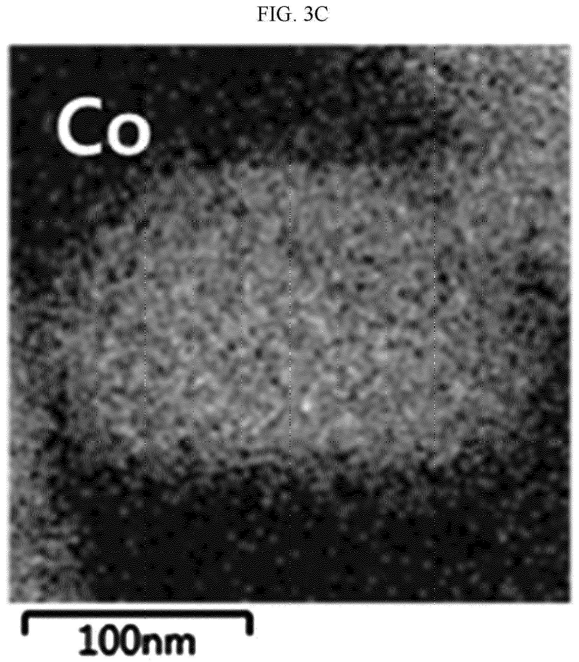

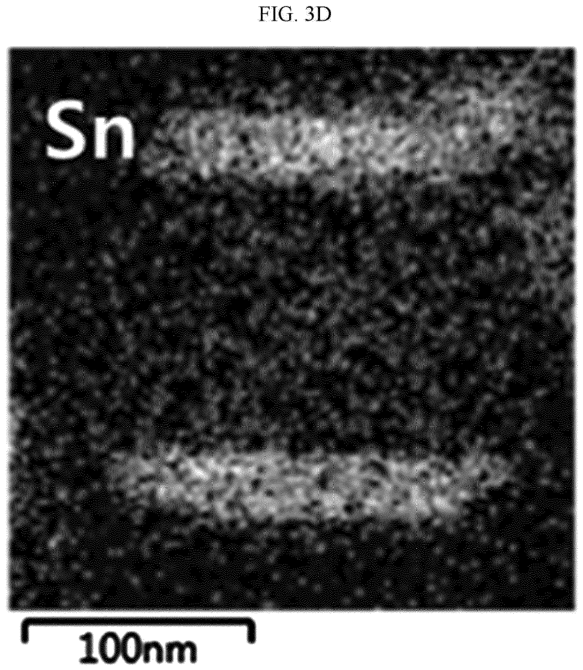

A STEM-EDS (scanning transmission electron microscopy-energy dispersive X-ray spectroscopy) analysis of the positive active material according to Synthesis Example 1 was performed. The STEM-EDS analysis was performed by using a JEM-ARM200F microscope made by JEOL Ltd., and the analysis results are shown in FIGS. 3A to 3D. Specifically, FIG. 3A is a STEM photograph of the positive active material, and FIGS. 3B, 3C, and 3D are photographs respectively showing EDS analysis results of Ni, Co, and Sn.

A sample was prepared by cutting the cross section of particles with an Ar ion-slicer to examine a coating formation result with STEM. The results are shown in FIG. 3A.

Referring to FIGS. 3A to 3D, the STEM-EDS analysis result showed that Ni elements and Co elements in a nickel-based lithium metal oxide and Sn elements in a lithium-metal oxide were present in each separate region. Accordingly, $Li_2SnO_3$ included in a coating layer was coated on a particular plane ([003] plane) of $Li[Ni_{0.80}Co_{0.15}Al_{0.05}]O_2$, a coated material.

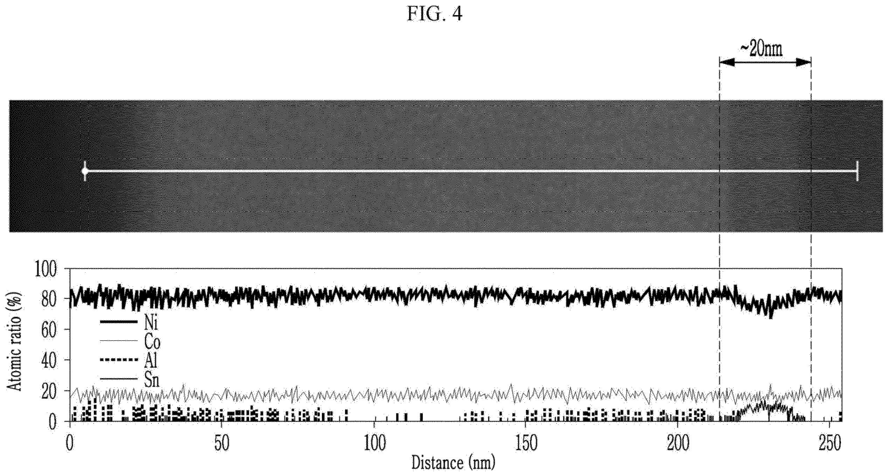

On the other hand, an EDS line-profile analysis of $Li[Ni_{0.80}Co_{0.15}Al_{0.05}]O_2$ plane-selectively coated with $Li_2SnO_3$ in the c axis direction was performed in order to examine a thickness and a shape of the $Li_2SnO_3$ coating layer of the positive active material of Synthesis Example 1, and the results are shown in FIG. 4. In FIG. 4, a distance indicates a radius from the surface of the positive active material to the center thereof. In FIG. 4, the distance of 0 nm indicates the surface of the positive active material.

As shown in FIG. 4, as a result of examining the cross section of a particle coated with $Li_2SnO_3$ through EDS-line profile (line profile), a thickness of the $Li_2SnO_3$ coating layer was about 20 nm.

## Evaluation Example 3: STEM-HAADF and FFT Analyses

STEM-HAADF (Scanning Transmission Electron Microscope-high-Angle Annular Dark Field) and Fast Fourier Transformation (FFT) analyses of the positive active material according to Synthesis Example 1 were performed. The STEM-HAADF and FFT analyses were performed by using a JEM-ARM200F microscope made by JEOL Ltd.

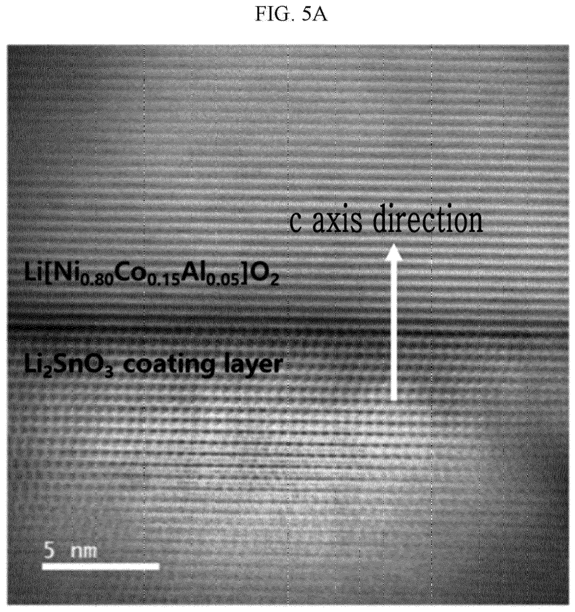

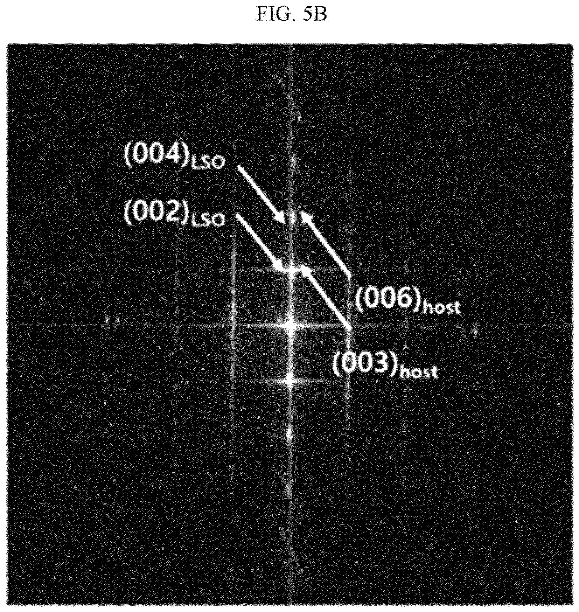

The STEM-HAADF and FFT analysis results were shown in FIGS. 5A and 5B. FIG. 5A is a HAADF image magnified with an atomic resolution with a respect to an interface between $Li[Ni_{0.80}Co_{0.15}Al_{0.05}]O_2$ and $Li_2SnO_3$ of the STEM image shown in FIG. 3A, and FIG. 5B shows a FFT pattern of the image.

Referring to FIGS. 5A and 5B, a growth direction of the coating layer was observed. Through the STEM image, as a result of observing an atom alignment and a FFT pattern of $Li[Ni_{0.80}Co_{0.15}Al_{0.05}]O_2$ and the $Li_2SnO_3$ coating layer, $Li[Ni_{0.80}Co_{0.15}Al_{0.05}]O_2$ and the $Li_2SnO_3$ coating layer all exhibited a layered structure growth in the same c-axis direction. Accordingly, as the (003) crystalline plane of $Li[Ni_{0.80}Co_{0.15}Al_{0.05}]O_2$, one layered structure, and the 002 plane of $Li_2SnO_3$ coating layer, another layered structure, were shared each other, the two materials all epitaxially grew in the c-axis direction.

## Evaluation Example 4: Evaluation of Power Output Characteristics

Power output characteristics of each cell according to Example 1 and Comparative Examples 1 and 3 were evaluated in the following method.

The coin cells according to Example 1 and Comparative Examples 1 and 3 were charged under a constant current to 4.3 V at a rate of 0.1 C in the 1st cycle and then, discharged under a constant current to 2.7 V at a rate of 0.1 C. The 2nd cycle and the 3rd cycle were repetitively performed under the same condition as the 1st cycle.

The 4th cycle was performed by charging the coin cells under a constant current to 4.3 V at a rate of 0.2 C and discharging them under a constant current to 2.7 V at a rate of 0.2 C after the 3rd cycle. The 5th cycle and the 6th cycle were repetitively performed under the same condition as that of the 4th cycle.

The 7th cycle was performed by charging the coin cells under a constant current to 4.3 V at 0.5 C and then discharging them under a constant current to 2.7 V at a rate of 0.5 C after the 6th cycle. The 8th cycle and the 9th cycle were repetitively performed under the same condition as that of the 7th cycle.

The 10th cycle was performed by charging the coin cells under a constant current to 4.3 V at 1.0 C and then discharging them under a constant current to 2.7 V at a rate of 1.0 C after the 9th cycle. The 11th cycle and the 12th cycle were repetitively performed under the same condition as that of the 10th cycle.

The 13th cycle was performed by charging the coin cells under a constant current to 4.3 V at 2.0 C and then discharging them under a constant current to 2.7 V at a rate of 2.7 C after the 12th cycle. The 14th cycle and the 15th cycle were repetitively performed under the same condition as that of the 13th cycle.

The 16th cycle was performed by charging the coin cells under a constant current to 4.3 V at 5.0 C and then discharging them under a constant current to 2.7 V at a rate of 5.0 C after the 15th cycle. The 17th cycle and the 18th cycle were repetitively performed under the same condition as that of the 16th cycle.

The 19th cycle was performed by charging the coin cells under a constant current to 4.3 V at 7.0 C and then discharging them under a constant current to 2.7 V at a rate of 7.0 C after the 18th cycle. The 20th cycle and the 21st cycle were repetitively performed under the same condition as that of the 19th cycle.

The 22nd cycle was performed by charging the coin cells under a constant current to 4.3 V at 10.0 C and then discharging them under a constant current to 2.7 V at a rate of 10.0 C after the 21st cycle. The 23th cycle and the 24th cycle were repetitively performed under the same condition as that of the 22nd cycle.

Power output characteristics of the coin cells according to Example 1 and Comparative Examples 1 and 3 measured in the above method are shown in Table 2.

(Table 2)

| Capacity retention relative to 0.1 C (%) | Example 1 | Comparative Example 1 | Comparative Example 3 |
|---|---|---|---|
| 1C | 73.7 | 65.9 | 67.4 |
| 2C | 61.7 | 51.4 | 51.4 |

(continued)

| Capacity retention relative to 0.1 C (%) | Example 1 | Comparative Example 1 | Comparative Example 3 |
|---|---|---|---|
| 5C | 42.3 | 34.1 | 33.1 |
| 7C | 34.3 | 24.3 | 21.7 |
| 10C | 22.3 | 8.10 | 8.60 |

Referring to Table 2, the coin cell of Example 1 exhibited improved power output characteristics compared with those of Comparative Examples 1 and 3 within a range of 1 C to 10 C.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**Claims**

1. A positive active material for a rechargeable lithium battery comprising
a nickel-based lithium metal oxide having a layered crystal structure and
a coating layer including a lithium-metal oxide selectively disposed on (003) crystalline plane of the nickel-based lithium metal oxide,
wherein the positive active material includes at least one secondary particle including an agglomerate of two or more primary particles

2. A positive active material according to claim 1, wherein the lithium-metal oxide has a C2/c space group crystal structure of a monoclinic crystal system.

3. A positive active material according to claim 1 or claim 2, wherein a lattice mismatch ratio between a (003) plane of the nickel-based lithium metal oxide and a (00l) plane (l is 1, 2 or 3) of the lithium-metal oxide is less than or equal to about 15%.

4. A positive active material according to any one of claims 1 to 3, wherein the lithium-metal oxide comprises a compound represented by Chemical Formula 1, a compound represented by Chemical Formula 2, or a combination thereof:

$$[\text{Chemical Formula 1}] \qquad Li_2MO_3$$

$$[\text{Chemical Formula 2}] \qquad Li_8MO_6$$

wherein, in Chemical Formula 1 and Chemical Formula 2,
M is a metal having an oxidation number of 4, optionally wherein the lithium-metal oxide comprises $Li_2SnO_3$, $Li_2ZrO_3$, $Li_2TeO_3$, $Li_2RuO_3$, $Li_2TiO_3$, $Li_2MnO_3$, $Li_2PbO_3$, $Li_2HfO_3$, $Li_8SnO_6$, $Li_8ZrO_6$, $Li_8TeO_6$, $Li_8RuO_6$, $Li_8TiO_6$, $Li_8MnO_6$, $Li_8PbO_6$, $Li_8HfO_6$, or a combination thereof.

5. A positive active material according to any one of claims 1 to 4, wherein:

a content of the lithium-metal oxide is about 0.1 mol% to about 5 mol% based on a total amount of the nickel-based lithium metal oxide and the lithium-metal oxide; and/or
the coating layer has a thickness of about 1 nm to about 100 nm.

6. A positive active material according to any one of claims 1 to 5, wherein the lithium-metal oxide selectively disposed on the (003) crystalline plane of the nickel-based lithium metal oxide and the nickel-based lithium metal oxide have a layered structure that is epitaxially grown in the same c-axis direction.

7. A positive active material according to any one of claims 1 to 6, wherein the nickel-based lithium metal oxide comprises a compound represented by Chemical Formula 3, a compound represented by Chemical Formula 4, or a combination thereof.

[Chemical Formula 3]     $Li_aNi_xCo_yQ^1_{1-x-y}O_2$

wherein, in Chemical Formula 3,
$0.9 \leq a \leq 1.05$, $0.6 \leq x \leq 0.98$, $0.01 \leq y \leq 0.40$, and $Q^1$ is at least one metal element selected from Mn, Al, Cr, Fe, V, Mg, Nb, Mo, W, Cu, Zn, Ga, In, La, Ce, Sn, Zr, Te, Ru, Ti, Pb, and Hf,

[Chemical Formula 4]     $Li_aNi_xQ2_{1-x}O_2$

wherein, in Chemical Formula 4,
$0.9 \leq a \leq 1.05$, $0.6 \leq x \leq 1.0$, and $Q^2$ is at least one metal element selected from Mn, Al, Cr, Fe, V, Mg, Nb, Mo, W, Cu, Zn, Ga, In, La, Ce, Sn, Zr, Te, Ru, Ti, Pb, and Hf.

8. A positive active material according to any one of claims 1 to 7, wherein
the primary particles have an particle diameter of about 100 nm to about 5 μm, and
the secondary particle comprises at least one of a small particle diameter secondary particle having an particle diameter of greater than or equal to about 5 μm and less than about 8 μm and a large particle diameter secondary particle having an particle diameter of greater than or equal to about 8 μm and less than or equal to about 20 μm.

9. A positive active material according to claim 8, wherein
the primary particles have a particle diameter of about 500 nm to about 3 μm.

10. A positive active material according to claim 8, wherein
the secondary particle includes at least one of a small particle diameter secondary particle having a particle diameter of greater than or equal to about 5 μm and less than about 6 μm and a large particle diameter secondary particle having a particle diameter of greater than or equal to about 10 μm and less than or equal to about 20 μm.

11. A method of preparing a positive active material for a rechargeable lithium battery, comprising
mixing a first precursor for forming lithium-metal (M) oxide and a second precursor for forming nickel-based lithium metal oxide having a layered crystal structure with a solvent to obtain a precursor composition,
adding a surfactant to the precursor composition, and
first heat-treating the resultant in a sealed state and drying to produce a positive active material precursor, and
mixing the positive active material precursor with a lithium precursor followed by second heat-treating to produce the positive active material according to any one of claims 1 to 10.

12. A method according to claim 11, wherein:

the first heat-treating is performed at about 150 °C to about 550 °C; and/or
the second heat-treating is performed at about 600 °C to about 950 °C.

13. A method according to claim 11 or claim 12, wherein the second heat-treating is performed at a temperature-increasing rate of less than or equal to about 5°C/min.

14. A method according to any one of claims 11 to 13, which further comprises cooling after the second heat-treating, and the cooling is performed at a cooling rate of less than or equal to about 1°C/min.

15. A method according to any one of claims 11 to 14, wherein:

the method further comprises additional heat-treating after the second heat-treating; and/or
the first precursor comprises a metal (M)-containing halide, a metal (M)-containing sulfate, a metal (M)-containing hydroxide, a metal (M)-containing nitrate, a metal (M)-containing carboxylate, a metal (M)-containing oxalate, or a combination thereof.

16. A method according to any one of claims 11 to 15, wherein:

the second precursor comprises at least one nickel precursor selected from $Ni(OH)_2$, NiO, NiOOH, $NiCO_3 \cdot 2Ni(OH)_2 \cdot 4H_2O$, $NiC_2O_4 \cdot 2H_2O$, $Ni(NO_3)_2 \cdot 6H_2O$, $NiSO_4$, $NiSO_4 \cdot 6H_2O$, a nickel fatty acid salt, and a nickel halide; and/or
the lithium precursor comprises a lithium hydroxide, a lithium nitrate, a lithium carbonate, a lithium acetate, a lithium sulfate, a lithium chloride, a lithium fluoride, or a mixture thereof.

17. A rechargeable lithium battery comprising the positive active material according to any one of claims 1 to 16.

FIG. 1

FIG. 2

FIG. 3A

FIG. 3B

FIG. 3C

FIG. 3D

FIG. 4

FIG. 5A

FIG. 5B

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2004 0058667 A (JES E CHEM; LG CHEMICAL LTD; OH SEUNG MO) 5 July 2004 (2004-07-05) | 1-6,17 | INV. C01G53/00 H01M4/00 |
| A | * the whole document * | 7-16 | |
| X | KR 2006 0029048 A (JES E CHEM) 4 April 2006 (2006-04-04) | 1-6,17 | |
| A | * the whole document * | 7-16 | |
| X | US 2014/087254 A1 (LI YA-DONG [CN] ET AL) 27 March 2014 (2014-03-27) | 1-6,17 | |
| A | * paragraphs [0029], [0036], [0089]; claims; example 5 * | 7-16 | |
| X | EP 2 879 209 A1 (SAMSUNG SDI CO LTD [KR]) 3 June 2015 (2015-06-03) | 1-7,17 | |
| A | * paragraphs [0028] - [0037]; claims; example 1 * | 8-16 | |
| X | US 2014/087261 A1 (LI YA-DONG [CN] ET AL) 27 March 2014 (2014-03-27) | 1-6,17 | |
| A | * paragraphs [0031] - [0033]; claims; example 5 * | 7-16 | TECHNICAL FIELDS SEARCHED (IPC) C01G H01M |

The present search report has been drawn up for all claims

| Place of search | Date of completion of the search | Examiner |
|---|---|---|
| Munich | 14 September 2020 | Nobis, Barbara |

EPO FORM 1503 03.82 (P04C01)

## ANNEX TO THE EUROPEAN SEARCH REPORT
## ON EUROPEAN PATENT APPLICATION NO.

EP 20 16 7417

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2020

| Patent document cited in search report | | Publication date | Patent family member(s) | | Publication date |
|---|---|---|---|---|---|
| KR 20040058667 | A | 05-07-2004 | NONE | | |
| KR 20060029048 | A | 04-04-2006 | NONE | | |
| US 2014087254 | A1 | 27-03-2014 | CN | 103700850 A | 02-04-2014 |
| | | | TW | 201414066 A | 01-04-2014 |
| | | | US | 2014087254 A1 | 27-03-2014 |
| EP 2879209 | A1 | 03-06-2015 | CN | 104681818 A | 03-06-2015 |
| | | | EP | 2879209 A1 | 03-06-2015 |
| | | | KR | 20150061474 A | 04-06-2015 |
| | | | US | 2015147651 A1 | 28-05-2015 |
| US 2014087261 | A1 | 27-03-2014 | CN | 103700833 A | 02-04-2014 |
| | | | TW | 201414064 A | 01-04-2014 |
| | | | US | 2014087261 A1 | 27-03-2014 |

EPO FORM P0459

For more details about this annex : see Official Journal of the European Patent Office, No. 12/82